# EUROPÄISCHE PATENTANMELDUNG

(11) **EP 3 770 464 A1**
(43) Veröffentlichungstag der Anmeldung: **27.01.2021**
(21) Anmeldenummer: 20186858.5
(22) Anmeldetag: 21.07.2020
(51) Int. Cl.: F16H 1/36

(54) **PLANETENGETRIEBE**

(30) Priorität: 22.07.2019 DE 102019119779
(71) Anmelder: Breuell & Hilgenfeldt GmbH, 22844 Norderstedt (DE)
(72) Erfinder: Klahn, Michael, 22844 Norderstedt (DE); Michel, Robert, 22844 Norderstedt (DE)
(74) Vertreter: RGTH

(57) **Zusammenfassung**

Um ein Getriebe (100) eines Fahrzeugs mit einer Planetenanordnung zu schaffen, welche ein Sonnenrad (12), ein Hohlrad (11) und mindestens zwei miteinander kämmende Planeten (13,16) umfasst, ist eine Konstruktion von Vorteil, welche Bauraum im Fahrzeug spart. Daher wird vorgeschlagen, dass das Getriebe (100) in das Rad des Fahrzeugs integriert ist.

## Beschreibung

Die Erfindung betrifft das Getriebe eines Fahrzeuges, insbesondere eines Flurförderzeugs, mit einer Planetenanordnung, welche ein Sonnenrad, ein Hohlrad und mindestens zwei miteinander kämmende Planeten umfasst, wobei das Getriebe in ein Rad des Fahrzeuges integriert ist.

### Stand der Technik

Üblicherweise besteht der Antrieb eines Kraftfahrzeugs aus einem Motor, insbesondere bei Flurförderzeugen häufig auch aus einem Elektromotor, und einem Getriebe, welches die Motorkraft auf ein Rad übersetzt. Um eine gute Kraftübertragung des Motors auf das Rad zu erreichen, kann das Getriebe als Planetengetriebe ausgestaltet werden. Planetengetriebe haben eine kompakte Bauform und bieten hohe, übertragbare Drehmomente, wobei kein Achsversatz zwischen Antriebsachse und Abtriebsachse entsteht.

Ein kompakt gebautes Planetengetriebe wird beispielsweise in der DE 10 2010 001 748 A1 beschrieben, welche eine Planetengetriebeanordnung beschreibt, die einem Sonnenrad als Antrieb, zumindest eine erste Gruppe und eine zweite Gruppe von Planetenrädern, ein Hohlrad als Abstützglied und einen Planetenradträger als Abtrieb umfasst. Dabei sind die Planetenräder der ersten und der zweiten Gruppe, welche miteinander kämmen, in radialer Richtung im Wesentlichen etwa zwischen der Rotationsachse des Sonnenrades und des Aussenumfanges des Hohlrades angeordnet.

Die US 3 737 000 A offenbart ebenfalls ein Planetengetriebe, insbesondere für ein Fahrzeugrad. Hierbei kämmt ein Stufenplanet sowohl mit dem Sonnenrad als auch mit dem Hohlrad, weswegen das Getriebe sehr kompakt konstruiert werden kann.

Die WO 2015/029345 A1 beschreibt ebenfalls ein Planetengetriebe, wobei die Kraft des Motors von einem Sonnenrad über Stufenplaneten und Einzelplaneten auf ein Hohlrad übertragen wird. Das Planetengetriebe ist zweistufig und umfasst einen Stufenplaneten pro Planetenpaar.

Es wäre jedoch wünschenswert, das Getriebe eines Fahrzeugs im Rad des Fahrzeuges unterzubringen, da der Bauraum innerhalb der Räder meist ungenutzt ist und im Fahrzeuginnern, wo der Bauraum knapp und wertvoll ist, Platz gespart werden kann. Durch die kompakte Bauweise von Planetengetrieben sind diese dazu grundsätzlich gut geeignet, da man zur Integration in ein Fahrzeugrad vor allem ein kurzbauendes Getriebe benötigt, da die Radbreite auf die fahrdynamischen Anforderungen abgestimmt sein soll, und nicht aufgrund eines Getriebeeinbaus verbreitert werden soll. Da dies die Fahrdynamik verschlechtern würde, ist eine maximale Getriebelänge vorgegeben. Bei einstufigen Planetengetrieben reicht häufig die maximal realisierbare Untersetzung nicht zur Anpassung der Motorleistung aus. Es werden also mehrstufige Planetengetriebe oder ein zusätzliches Vorgelege benötigt, damit die Getriebeübersetzung die nötige Traktion für das Rad erreichen kann. Klassische mehrstufige Planetengetriebe haben jedoch eine lange Bauform, sind aufwendig und teuer, was bei der Integration in das Rad zur unerwünschten Verlängerung des Rades führt und zudem die Kosten in die Höhe treibt.

### Darstellung der Erfindung: Aufgabe, Lösung und Vorteile

Es ist vorteilhaft, ein Planetengetriebe derart auszulegen, dass bei gleicher Baulänge größere Untersetzungen realisiert werden, um das Planetengetriebe in ein Rad integrieren zu können. Dies kann beispielsweise durch ein Doppelplanetengetriebe realisiert werden, weswegen diese für radintegrierte Getriebe besonders vorteilhaft sind. Das erforderliche Untersetzungsverhältnis ist bei gegebenen Fahrleistungen unter anderem vom Raddurchmesser abhängig, weswegen die Integration eines passenden Getriebes in das Rad vorteilhaft ist, das Getriebe also genau auf das Rad und das Fahrzeug abgestimmt werden muss. Planetengetriebe sind für eine Integration in das Rad durch ihre runde Geometrie besonders geeignet. Sollte das Planetengetriebe bei einer Integration in ein Rad mit dem Rad fest verbunden sein und bei der Wartung auch mit diesem getauscht werden, ist eine platzsparende und kostengünstige Lösung notwendig. Es ist daher in jedem Fall notwendig, dass ein Planetengetriebe zur Integration in ein Rad eines Fahrzeuges dadurch verbessert wird, dass das Getriebe von seiner Größe, dem Über- bzw. Untersetzungsvermögen und der Betriebsdauer genau auf das Rad abgestimmt wird.

Dabei ist es von Vorteil, wenn die Länge des Getriebes die durch fahrdynamische Anforderungen, wie Haftung, Laufruhe und Rollwiderstand des Fahrzeugs, definierte Radbreite nicht überschreitet. Hierfür eignet sich ein Planetengetriebe mit Reihen- oder Doppelplaneten, da maximale Übersetzungsverhältnisse bei minimaler Getriebelänge erreicht werden.

Der Erfindung liegt die Aufgabe zugrunde, ein Planetengetriebe derart zu konstruieren, dass die fahrzeugwesentlichen Eigenschaften der Räder nicht negativ beeinflusst werden und das Planetengetriebe platzsparend in das Rad integriert wird, sodass das Getriebe mit dem Rad getauscht werden kann. Die Berücksichtigung der oben genannten Aspekte sorgt für eine ausreichende Tragfähigkeit des Rades und die damit notwendige Mindestbreite, welche jedoch nicht drastisch überschritten wird, um Platzbedarf, Kosten und Fahrzeugdynamik nicht negativ zu beeinflussen.

Erfindungsgemäß wird dabei das Getriebe eines Fahrzeuges mit einer Planetenanordnung ausgestattet, welche ein Sonnenrad, ein Hohlrad und mindestens zwei miteinander kämmende Planeten umfasst, welche ein Planetenpaar bilden, welches als Doppelplanet bezeichnet wird, wobei das Getriebe in das Rad des Fahrzeuges integriert ist.

Das Fahrzeug kann dabei ein Flurförderzeug oder ein kleines Transportgerät von einigen Tonnen Gewicht, vorzugsweise bis zu fünf Tonnen Gewicht sein, welches auch unbemannt geführt werden kann. Der Radantrieb kann auch für ein angetriebenes Kettenrad eines Kettenfahrzeuges oder Zahnrad einer Lineareinheit mit Zahnstange oder Zahnriemen verwendet werden, wobei das Rad sowohl ein Traktionsrad, also auch ein Kettenrad oder ein Zahnrad sein kann.

Bei der Planetenanordnung werden dabei mindestens zwei Stirnräder beziehungsweise Planeten auf einem konzentrischen Kreis um das Sonnenrad angeordnet, wobei die Planetenräder in einem Planetenträger gelagert werden, welcher innerhalb eines Hohlrades angeordnet ist. Die Planeten kämmen dabei miteinander und mit dem Hohlrad bzw. dem Sonnenrad, wobei die Anzahl der Zähne von Sonnenrad, Hohlrad und Planeten jeweils unterschiedlich sein können und in Abhängigkeit der gewünschten Übersetzung gewählt werden.

Vorzugsweise geht die Kraft des Planetengetriebes dabei über das Hohlrad auf die Umgebung, insbesondere das Rad des Fahrzeugs, über, das Hohlrad bildet also das Abtriebsrad des Getriebes. Bei einem Abtrieb über das Hohlrad kann zudem das Rad beziehungsweise die Radnabe direkt darauf laufen, es ist also keine weitere Verbindung beziehungsweise kein weiterer Übersetzungsmechanismus nötig, um die Kraft vom Getriebe auf das Rad zu übertragen. Dabei kann bei einem Abtrieb über das Hohlrad ein Übersetzungsverhältnis von 1:11 schon mit einer Planetenstufe realisiert werden, bei zwei Planetenstufen liegt das Übersetzungsverhältnis bevorzugt zwischen 1:10 und 1:50, besonders bevorzugt bei 1:10, 1:20 und 1:30.

Vorzugsweise wird bei einem Abtrieb über das Hohlrad des Getriebes die Lauffläche des Rades direkt auf das Hohlrad gegossen, welches außen die Planetenanordnung umfasst. Bei gegebener Untersetzung und Baulänge ist die Belastbarkeit des Planetengetriebes vom Durchmesser abhängig. Dünne Radbeläge maximieren den möglichen Getriebedurchmesser, weshalb direkt auf das Hohlrad aufgegossene Radbeläge die Tragfähigkeit des Getriebes maximieren. Damit ist keine zusätzliche Felge oder ein Reifen nötig, da das Hohlrad direkt mit der Lauffläche des Rades verbunden ist, was wiederum Teile einspart. Dabei kann das Hohlrad auch Teil des Rades sein oder das Rad kann vorzugsweise aus dem Hohlrad bestehen. Die Lauffläche ist hierbei der Teil des Rades, welcher mit der Umgebung in Berührung kommt, also über die Traktion auf der Straße oder dem Untergrund die Fortbewegung des Fahrzeugs sicherstellt. Das Sonnenrad, welches über eine Kupplung mit der Abtriebswelle des Motors verbunden werden kann, ist vorzugsweise an einem Ende als Polygon ausgeformt, welches als Kupplung dienen kann beziehungsweise mit der Kupplung in Verbindung stehen kann. Die Kupplung kann alternativ auch eine Klauenkupplung sein. Die Kupplung kann dabei eine lösbare Verbindung des Sonnenrades mit der Motorwelle darstellen, welche jedoch vorzugsweise nur im stehenden Zustand des Kraftfahrzeugs beziehungsweise bei der Montage oder Demontage gelöst wird.

Besonders bevorzugt umfasst das Getriebe mehrere Planetenpaare, wobei in jedem Planetenpaar zwei Planeten miteinander kämmen. Ein Planetenpaar, auch Doppelplanet genannt, besteht aus zwei miteinander kämmenden Planeten, wobei einer davon zusätzlich mit dem Sonnenrad und der andere mit dem Hohlrad kämmt. Von einem einfachen Planetengetriebe mit einem Sonnenrad, einem Hohlrad und einem oder mehreren Planeten, die unmittelbar mit dem Sonnenrad und dem Hohlrad kämmen, gelangt man durch das Ersetzen der einfachen Planeten, also Einzelplaneten, durch zwei miteinander kämmender Planeten, also Doppelplaneten, zum Doppelplanetengetriebe. Unter einer Anordnung mit einer einfachen Planetenstufe wird dabei ein Planetengetriebe verstanden, in welchem die enthaltenen Planetenräder sowohl mit dem Sonnenrad als auch mit dem Hohlrad des Planetengetriebes kämmen, also nebeneinander angeordnet sind und nicht als Doppel- oder Reihenplaneten. Ein Doppelplanetengetriebe hat im Gegensatz zu zwei Planetengetrieben den Vorteil, dass sie nicht aus zwei hintereinander eingebauten Planetengetrieben besteht, was günstiger in der Herstellung ist und weniger Platz benötigt. Mit einem Doppelplanetengetriebe kann eine höhere Übersetzung im Vergleich zu einer Anordnung mit einer einfachen Planetenstufe realisiert werden, da ein kleineres Sonnenrad verwendet werden kann, was die Untersetzung erhöht. Jedoch hat dies eine verringerte Tragfähigkeit des Sonnenrades zur Folge.
In einer bevorzugten Ausführungsform umfasst das Getriebe mindestens einen Planeten, welcher ein Stufenplanet ist. Ein Stufenplanet besteht dabei aus zwei verdrehfest miteinander verbundenen Stirnrädern, welche auf einer gemeinsamen Achse drehen oder mit einer gemeinsamen Welle rotieren. Bevorzugterweise ist dabei das Planetengetriebe ein Doppelplanetengetriebe und ein Planet pro Planetenpaar ist ein Stufenplanet. Dies ist daher vorteilhaft, da bei einigen Anwendungen die mit Doppelplaneten erreichbare Untersetzung nicht ausreicht. Durch die Verwendung eines Stufenplaneten können erheblich höhere Untersetzungen bei minimaler Baulängenerhöhung realisiert werden. Man gelangt durch das Ersetzen eines Stirnrades eines Doppelplanetengetriebes durch einen Stufenplaneten zu einem Stufenplanetengetriebe. Die Stufenplaneten sind dabei bevorzugt auf einem konzentrischen Kreis um das Sonnenrad angeordnet und auf einem Planetenträger gelagert, wobei dieser mit den Planeten innerhalb des Hohlrades angeordnet ist. Vorzugsweise umfasst der Planetenträger dabei eine Aufnahme für die Planetenachsen der Stufenräder und der weiteren Planetenräder, sodass alle Planeten des Planetengetriebes auf einem gemeinsamen Träger gelagert werden können.

Bevorzugterweise kämmen die Stufenplaneten mit dem Sonnenrad und jeweils einem weiteren Planeten. Der weitere Planet ist dabei bevorzugt zwischen Stufenplanet und Hohlrad angeordnet und kämmt mit diesen beiden.

In einer bevorzugten Ausführungsform besteht jedes Planetenpaar des Getriebes aus genau einem Stufenplaneten und genau einem Einzelplaneten. Ein Einzelplanet ist dabei ein Planet, welcher aus einem einzigen Stirnrad besteht, also ein Zahnrad. Ein Einzelplanet kann in einer Anordnung mit einer Planetenstufe sowohl unmittelbar mit dem Sonnenrad, also auch unmittelbar mit dem Hohlrad kämmen, oder in einer Anordnung als Doppel- oder Reihenplanet unmittelbar mit dem Sonnen- oder dem Hohlrad kämmen. Ein Einzelplanet kann aber nicht als Stufenplanet ausgeformt sein oder anderweitig verdrehfest mit einem weiteren Stirnrad verbunden sein.

Vorzugsweise ist das Getriebe an einen Elektromotor angeschlossen, wobei besonders bevorzugt der Elektromotor ein Außenläufermotor ist. Dabei ist der Motor im Gegensatz zum Getriebe nicht in das Rad des Fahrzeuges integriert, sondern im Fahrzeug fest verankert. Über eine Motorwelle wird die Kraft des Motors auf das Sonnenrad des Getriebes übertragen, wobei sich vorzugsweise eine lösbare Kupplung zwischen der Motorwelle und dem Sonnenrad des Getriebes befindet.

Bevorzugterweise umfasst das Getriebe mindestens sechs Planeten, wobei diese in mindestens drei Planetenpaare aufgeteilt sind. Ein Planetenpaar besteht dabei aus zwei Planeten, welche vorzugsweise in Reihe hintereinander angeordnet sind, sodass jeder Planet mit dem jeweils anderen Planeten kämmt und zusätzlich entweder mit dem Hohlrad oder dem Sonnenrad kämmt.

Vorzugsweise sind alle Planeten dabei in einem einteiligen Planetenträger gelagert. Bevorzugterweise sind die Planeten dabei über die jeweilige Planetenachse über beidseitige Planetenlagerungen an dem Planetenträger befestigt, sodass sie im Planetenträger frei rotieren können und gut ineinander greifen. Die Lagerungen einer Planetenstufe liegen dabei auf einem konzentrischen Kreis um das Zentrum des Planetenträgers, in dem sich das Sonnenrad befindet. Eine Planetenstufe besteht dabei aus gleichen Planeten, das heißt entweder Stufenplaneten oder einzelnen Planetenrädern mit jeweils der gleichen Anzahl an Zähnen im Zahnrad. Der Planetenträger kann dabei lösbar an einem Flansch angebracht werden, mit dem er und das Rad des Fahrzeugs an einem Rahmen oder Gehäuse des Fahrzeugs befestigt werden können. Bevorzugterweise ist der Flansch dabei mit wenigen, insbesondere drei, Schrauben am Fahrzeug befestigt, um eine schnelle Montage und Demontage zu gewährleisten.

Vorzugsweise sind die Zahnräder des Getriebes, also das Hohlrad, das Sonnenrad und die Planetenräder, nicht gehärtet, da das Getriebe eine begrenzte, vorher festgelegte Betriebsdauer hat. Da das Getriebe bevorzugt mit dem Rad getauscht wird, muss das Getriebe demnach nicht für eine unbegrenzte Betriebsdauer und daher möglichst ausfallsicher ausgelegt sein, sondern kann nach einem regelmäßigen Wartungszyklus oder Austauschzyklus des Rades bemessen werden. Durch den routinemäßigen Austausch und die dadurch bedingte begrenzte Betriebsdauer können teure Fertigungsschritte, wie das Härten der Zahnräder, entfallen und das Getriebe kann günstiger hergestellt werden.

### Kurze Beschreibung der Zeichnungen

Vorteilhafte Ausführungsformen und Ausführungsbeispiele der Erfindung werden nachstehend anhand der Zeichnungen näher erläutert. Es zeigen schematisch:
- Figur 1a: eine Darstellung des Aufbaus eines Planetengetriebes nach dem Stand der Technik mit einem Einzelplaneten
- Figur 1b: eine Darstellung des Aufbaus einer ersten Ausführungsform eines erfindungsgemäßen Doppelplanetengetriebes mit zwei Einzelplaneten,
- Figur 1c: eine Darstellung des Aufbaus einer zweiten Ausführungsform eines erfindungsgemäßen Doppelplanetengetriebes mit Einzelplanet und Stufenplanet,
- Figur 2: eine Explosionsdarstellung eines Getriebes mit einer Getriebestufe in einem Rad mit Kugellager.

### Bevorzugte Ausführungsformen der Erfindung

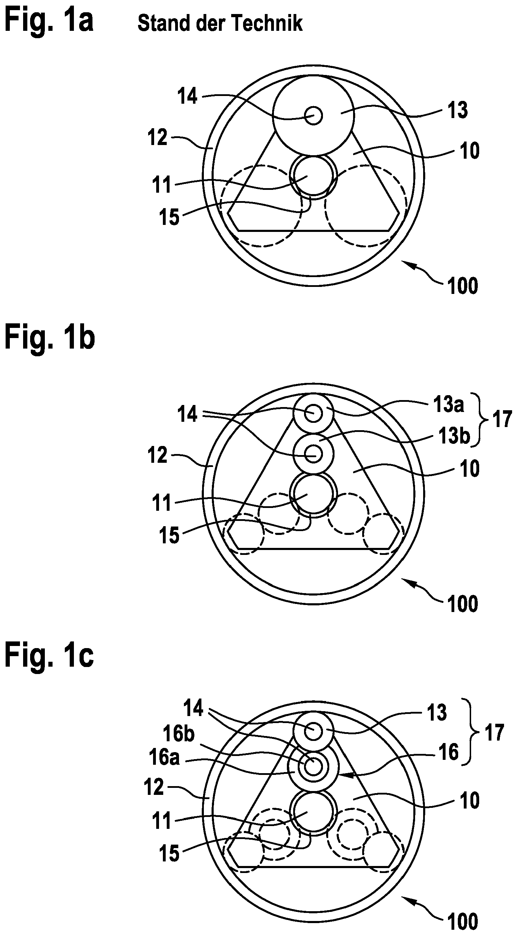

Figur 1a zeigt ein Planetengetriebe 100 nach dem Stand der Technik. In der Mitte des Planetengetriebes 100 ist ein Sonnenrad 11 angebracht, welches mit einem Lager 15 in einem Planetenträger 10 gelagert ist. Drei Einzelplaneten 13 kämmen dabei sowohl mit dem innen liegenden Sonnenrad 11, als auch mit dem außen liegenden Hohlrad 12. Die Einzelplaneten 13 sind dabei auf einem konzentrischen Kreis um das Sonnenrad 13 angeordnet und drehen sich um die Planetenachsen 14.

Figur 1b zeigt eine erfindungsgemäße Ausführungsform eines Planetengetriebes 100, in dessen Zentrum ein Sonnenrad 11 mit einem Lager 15 in einem Planetenträger 10 gelagert ist. Das Sonnenrad 11 bildet dabei das Zentrum des Planetengetriebes 100, welches außen durch das Hohlrad 12 begrenzt wird. Zwischen Hohlrad 12 und Sonnenrad 11 befinden sich zwei Planetenstufen, welche beide Einzelplaneten 13a bzw. 13b enthalten. Dabei kämmt der innere Einzelplaneten 13b mit dem äußeren Einzelplaneten 13a und mit dem Sonnenrad 11 und der äußere Einzelplanet 13a kämmt mit dem inneren Einzelplaneten 13b und mit dem Hohlrad 12. Die Einzelplaneten 13a und 13b sind über Planetenachsen 14 am Planetenträger 10 befestigt, und können um die Planetenachsen 14 frei rotieren. Das Planetengetriebe 100 ist ein Doppelplanetengetriebe und umfasst drei Planetenpaare 17, welche jeweils zwei Einzelplaneten 13a und 13b umfassen.

In der Figur 1c wird ebenfalls eine erfindungsgemäße Ausführungsform eines Planetengetriebes 100 dargestellt, in dessen Mitte ein Sonnenrad 11 beweglich in einem Lager 15 angeordnet ist, welches von einem Planetenträger 10 umfasst wird. Der Planetenträger 10 enthält Planetenachsen 14, welche in zwei Stufen, jeweils in konzentrischen Kreisen um das Sonnenrad 11 herum angeordnet sind. Um die innere Stufe rotieren dabei Stufenplaneten 16, um die äußere Stufe Einzelplaneten 13. Dabei kämmt das größere Zahnrad 16a des Stufenplaneten 16 mit dem Sonnenrad 11 und das kleinere Zahnrad 16b des Stufenplaneten 16 mit dem Einzelplaneten 13, der wiederum mit dem Hohlrad 12 kämmt, welches außen am Planetengetriebe 100 angeordnet ist. Sowohl die Einzelplaneten 13 als auch die Stufenplaneten 16 sind dabei mit den Planetenachsen 14, um welche sie rotieren, an dem Planetenträger 10 befestigt. Insgesamt umfasst das Planetengetriebe 100 drei Planetenpaare 17, wobei jedes Planetenpaar aus einem Stufenplaneten 16 und einem Einzelplaneten 13 besteht.

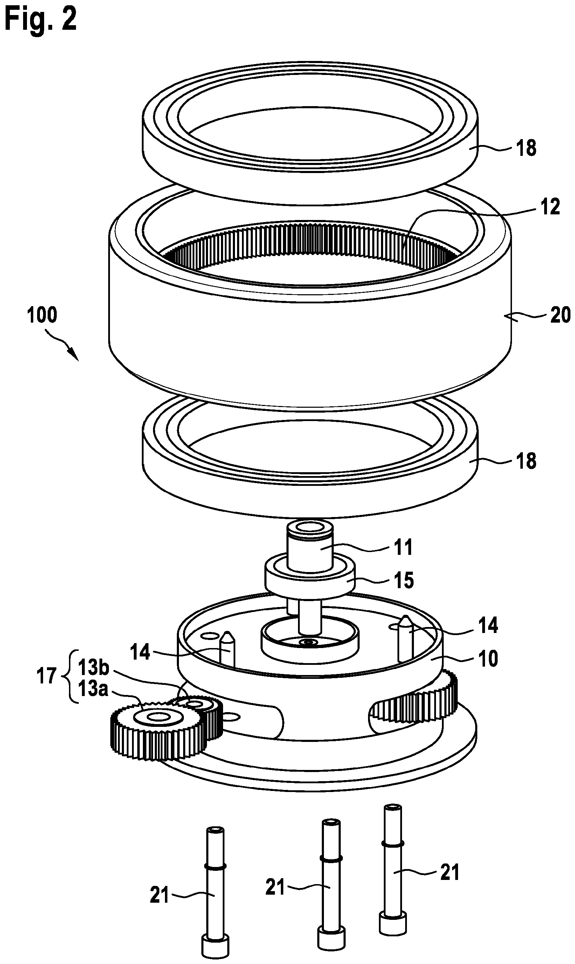

Figur 2 zeigt eine Explosionszeichnung eines erfindungsgemäßen Planetengetriebes 100, welches in das Rad eines Fahrzeugs integriert ist, wobei hier die Ausführungsform des Doppelplanetengetriebes ohne Stufenplaneten dargestellt ist. Im Planetenträger 10 sind drei Planetenpaare 17, bestehend aus jeweils zwei Einzelplaneten 13a und 13b, angeordnet, wobei die Planetenachsen 14, mit welchen die äußeren, größeren Einzelplaneten 13a am Planetenträger 10 befestigt sind, dargestellt werden. Die inneren, kleineren Einzelplaneten 13b sind ebenfalls mit Planetenachsen am Planetenträger 10 befestigt. Alle Einzelplaneten 13 können um ihre Planetenachse 14 frei rotieren. Im Zentrum des Planetenträgers 10 befindet sich ein Lager 15 in welchem das Sonnenrad 11 gelagert ist. Die inneren Einzelplaneten 13b kämmen mit dem Sonnenrad 11 im Zentrum, die äußeren Einzelplaneten 13a kämmen mit dem außen umlaufenden Hohlrad 12. Zudem kämmen die inneren 13b und äußeren Einzelplaneten 13a auch miteinander. Im Hohlrad 12, um dessen Verzahnung herum, sind zwei Kugellager 18 angeordnet, welche um den Planetenträger 10 herum, auf beiden Seiten der Planetenpaare 17, gelagert sind. Auf der Außenseite des Hohlrades 12 ist die Lauffläche 20 des Rades aufgebracht, womit die Motorkraft, welche über eine Motorwelle, das Sonnenrad 11 und die Einzelplaneten 13 auf das Hohlrad 12 übertragen wird in Traktion auf die Straße bzw. die Umgebung umgewandelt werden kann. Der Planetenträger 10 umfasst zudem Ausnehmungen für Schrauben 21 zur Befestigung des Rades mit Planetengetriebe 100 an einem Fahrzeug bzw. dessen Karosserie oder Gehäuse.

### Bezugszeichenliste

- 100: Planetengetriebe

- 10: Planetenträger
- 11: Sonnenrad
- 12: Hohlrad
- 13: Einzelplanet
- 13a: äußerer Einzelplanet
- 13b: innerer Einzelplanet
- 14: Planetenachse
- 15: Lager
- 16: Stufenplanet
- 16a: größeres Zahnrad
- 16b: kleineres Zahnrad
- 17: Planetenpaar
- 18: Kugellager

- 20: Lauffläche
- 21: Schrauben

## Patentansprüche

1. Getriebe (100) eines Fahrzeugs, insbesondere eines Flurförderzeugs, mit einer Planetenanordnung, welche ein Sonnenrad (12), ein Hohlrad (11) und mindestens zwei miteinander kämmende Planeten (13,16 bzw. 13a, 13b) umfasst,
**gekennzeichnet dadurch,**
**dass** das Getriebe (100) in das Rad des Fahrzeugs integriert ist.

2. Getriebe (100) nach Anspruch 1,
**gekennzeichnet dadurch,**
**dass** das Hohlrad (12) das Abtriebsrad des Getriebes bildet.

3. Getriebe (100) nach Anspruch 1 oder 2,
**gekennzeichnet dadurch,**
**dass** das Getriebe (100) mehrere Planetenpaare (17) umfasst, wobei in jedem Planetenpaar (17) vorzugsweise zwei Planeten (13,16 bzw. 13a, 13b) miteinander kämmen.

4. Getriebe (100) nach einem der vorhergehenden Ansprüche,
**gekennzeichnet dadurch,**
**dass** mindestens einer der Planeten (13,16), bevorzugterweise ein Planet pro Planetenpaar (17), ein Stufenplanet (16) ist.

5. Getriebe (100) nach Anspruch 4,
**gekennzeichnet dadurch,**
**dass** die Stufenplaneten (16) mit dem Sonnenrad (12) und jeweils einem weiteren Planeten (13) kämmen.

6. Getriebe (100) nach Anspruch 4 oder 5,
**gekennzeichnet dadurch,**
**dass** jedes Planetenpaar (17) aus genau einem Stufenplaneten (16) und genau einem Einzelplaneten (13) besteht.

7. Getriebe (100) nach einem der vorhergehenden Ansprüche,
**gekennzeichnet dadurch,**
**dass** die Lauffläche (20) des Rades direkt mit dem Hohlrad (11) verbunden ist.

8. Getriebe (100) nach einem der vorhergehenden Ansprüche,
**gekennzeichnet dadurch,**
**dass** das Getriebe (100) an einen Elektromotor angeschlossen ist.

9. Getriebe (100) nach Anspruch 7,
**gekennzeichnet dadurch,**
**dass** der Elektromotor ein Außenläufermotor ist.

10. Getriebe (100) nach einem der vorhergehenden Ansprüche,
**gekennzeichnet dadurch,**
**dass** das Getriebe (100) mindestens sechs Planeten (13,16) umfasst, wobei diese in mindestens drei Planetenpaare (17) aufgeteilt sind.

11. Getriebe (100) nach einem der vorhergehenden Ansprüche,
**gekennzeichnet dadurch,**
**dass** die Planeten (13,16) in einem einteiligen Planetenträger (10) gelagert sind.

12. Getriebe (100) nach einem der vorhergehenden Ansprüche,
**gekennzeichnet dadurch,**
**dass** die Zahnräder des Getriebes (100) nicht gehärtet sind.
